# EUROPEAN PATENT APPLICATION

(11) **EP 4 298 900 A1**
(43) Date of publication of application: **03.01.2024**
(21) Application number: 23182419.4
(22) Date of filing: 29.06.2023
(51) Int. Cl.: A01K 5/02

(54) **SYSTEM FOR MAINTAINING A FEED AMOUNT, AND METHOD FOR FEEDING FARM ANIMALS**

(30) Priority: 30.06.2022 NO 20220742
(71) Applicant: Fjøssystemer AS, 2634 Fåvang (NO)
(72) Inventor: Stenumgaard, Erik, 2647 Sør-Fron (NO)
(74) Representative: Håmsø Patentbyrå AS

(57) **Abstract**

A system (2) for maintaining an amount of feed (3) available for a livestock along a feeding fence (12), the system (2) comprising a control device (23), a feed distribution device (21), and at least one sensor (22) arranged to monitor the height level of feed (3) on a feeding alley (11) along the feeding fence (12),
wherein the at least one sensor (22) is a detecting laser scanner located above the feeding alley (11) and arranged to detect the height level of feed (3) in several separate sections (222) along the feeding fence (12).

A method of feeding coarse fodder (3) to a cattle livestock is also disclosed, the method comprising steps of operating the system (2) for maintaining an amount of feed (3) available for a livestock along a feeding fence (12) at a feeding alley (11).

## Description

The invention regards a system for maintaining an amount of feed available for a livestock along a feeding fence, the system comprising a control device, a feed distribution device, and at least one sensor arranged to monitor the height level of feed on a feeding alley along the feeding fence, wherein the at least one sensor is arranged above the feeding alley and is arranged to detect the height level of feed in each of several scanning sections along the feeding fence.

Furthermore, the invention regards a method of feeding coarse fodder to a cattle livestock, by providing a cattle livestock feeding location with a system according to the invention; wherein the method comprises the further steps of:
operating the feed distribution device to distribute coarse fodder along a portion of the feeding fence within the range monitored by the at least one sensor located above the feeding alley;
monitoring the height levels of feed along said portion of the feeding alley; and upon recorded height level of feed present in one or more of the scanning sections being below a defined minimum limit, operating the feed distribution device using the control device to provide operating instructions to the feed distribution device for supply of feed to obtain a height level of feed above said defined minimum limit.

When feeding animals in a livestock, e.g. dairy cows and other high yielding cattle, it is important to give the animals continuous access to the feed to maintain the high yield. While access to concentrated cattle feeds like grain feed can easily be given and controlled through automatic, computerized systems, the access to coarse fodder like hay, silage, beets, etc. is based on the animal accessing the feed through a feeding fence at a feeding alley. Even though a feeding system provides an even supply of the coarse fodder along the feeding fence, the volume of fodder along the extent of the feeding fence may develop quite differently from one supply event to the next, causing some feeding locations to offer no fodder, thus badly influencing on the yield of some animals, especially those at the lower level of a herd hierarchy.

WO2020091597 discloses a feeding system for feeding animals, in particular cows, comprising a feed supply system with feed for the animals. An autonomous feed wagon is configured to automatically feed the animals with feed from the feed supply system. The feed wagon comprises a sensor device for measuring the quantity of feed which is present along a feed fence along which the feed wagon travels.

WO2014166498 discloses an animal monitoring system for determining feed consumption of one or more animals feeding at a feeding area, comprising an imaging unit, i.e. a camera, for range imaging the feeding area, identification means configured to uniquely identify each feeding animal, and processing means configured for assessing the amount of feed consumed by each identified animal by determining the reduction of feed in subsequent images of the feeding area in front of each identified animal.

From EP3494779 is known a livestock feeding system for determining a roughage intake of individual livestock animals in an animal shed environment comprises a feeding alley for dispensing roughage for the animals thereon, a feeding fence which gives the animals in the animal shed environment access to the roughage in the feeding alley, an animal recognition system configured to repeatedly recognise individual animals as a function of the time and the location along the feeding fence, a feed-measuring device for repeatedly determining a feed amount indication along the feeding fence, and a control unit for the livestock feeding system which is operatively connected to the animal recognition system and to the feed-measuring device. The feed-measuring device may be provided on a feed wagon or on a separate vehicle. The feed-measuring device is configured to determine a feed amount indicator, and this may be an absolute amount, expressed as a volume or mass, but it may also be a relative amount, such as a percentage of the original amount.

In particular, the feed-measuring device comprises a feed-height meter, by means of which a reduction in the thickness of the feed layer can be determined. The feed-measuring device may be a laser height meter emitting a laser beam directed at the fodder pile.

The invention has for its object to remedy or to reduce at least one of the drawbacks of the prior art, or at least provide a useful alternative to prior art.

The object is achieved through features, which are specified in the description below and in the claims that follow.

A system for maintaining a feed amount available for a livestock along a feeding fence is provided. The system comprises a control device, a feed distribution device and at least one detecting laser scanner located above a feeding alley, the at least one scanner being arranged to detect a height level of feed present in separate sections on the feeding alley along the feeding fence.

In one embodiment, each of the at least one sensor is arranged to scan a broken line along the feeding fence.

Typically, each of the at least one sensor is arranged to monitor several sections of the feeding fence, each section representing a feeding position at the feeding alley, e.g. 8-10 sections of the feeding alley.

Preferably, the control device is arranged to disregard recorded levels above a defined height, thus eliminating monitoring of head of an animal eating feed provided on the feeding alley, etc.

The control device is arranged to process the signals provided by the at least one detecting laser scanner to maintain a defined minimum level of feed on the monitored section of the feeding alley by providing adequate operational instructions to the feed distribution device.

Furthermore, a method of feeding farm animals is provided, the method comprising the steps of:
- providing a cattle livestock feeding location with a system for maintaining a feed amount available for the livestock along a feeding fence as disclosed above;
- operating the feed distribution device to distribute feed on the feeding alley along a portion of the feeding fence at least within the range monitored by the at least one detecting laser scanner located above a feeding alley;
- monitoring said portion of the feeding alley;
- upon recorded height level of feed present in one or more of the separate scanning sections on the feeding alley along the feeding fence being below a defined limit, operating the feed distribution device using the control system to provide operating instructions to the feed distribution device.

The height level of feed recorded within a scanning section triggering operation instructions to the feed distribution device may be a calculated average height, a minimum height or a maximum height of feed with said scanning section.

Preferably, a scanning resolution of the detecting laser scanner may be set according to the coarseness of the feed to be distributed, thus limiting the signal data to be processed to a level sufficient to assure cattle continuous access to feed.

The invention is defined by the independent patent claims. The dependent claims define advantageous embodiments of the invention.

In a first aspect the invention relates more particularly to a system for maintaining an amount of feed available for a livestock along a feeding fence, the system comprising:
a control device,
a feed distribution device, and
at least one sensor arranged to monitor the height level of feed on a feeding alley along the feeding fence,
   and wherein
   the at least one sensor is a detecting laser scanner located above the feeding alley and arranged to detect the height level of feed in several separate sections along the feeding fence.

The at least one sensor may be arranged to scan a broken line along the feeding fence. Alternatively, the at least one sensor may be arranged to scan several fields along the feeding fence. Furthermore, the length of each section of the broken line, alternatively the shape of each scanning field, can be set individually. An effect of this is that the monitoring of the presence of feed along the feed fence may be effectively adopted to the design of the feeding alley, the disposal properties of the feed distribution device, the structure of the feed, etc.

The control device may be arranged to disregard registered levels above a defined height, thus eliminating recording of monitored objects temporarily present above the feeding alley. An effect of this is that part of an animal body, e.g. a head of a cattle reaching for feed, the feed distribution device travelling along the feeding alley, or an animal technician inspecting the feeding area being monitored, do not influence on the operation of the feed system.

The control device may be arranged to process signals provided by the at least one detecting laser scanner to maintain a defined minimum level of feed on the monitored section of the feeding alley by providing adequate operational instructions to the feed distribution device.

In a second aspect the invention relates more particularly to a method of feeding coarse fodder to a cattle livestock, the method comprising following steps:
a) providing a cattle livestock feeding location with a system according to the first aspect of the invention;
wherein the method comprises the further steps of:
b) operating the feed distribution device to distribute coarse fodder on the feeding alley along a portion of the feeding fence within the range monitored by the at least one detecting laser scanner located above the feeding alley;
c) monitoring said portion of the feeding alley;
d) upon recorded height level of feed present in one or more of the scanning sections on the feeding alley along the feeding fence being below a defined minimum limit, operating the feed distribution device using the control device to provide operating instructions to the feed distribution device for supply of feed to at least said one or more of the scanning sections to obtain a height level of feed above said defined minimum limit.

The height level of feed recorded within a scanning section triggering operating instructions to the feed distribution device may be a calculated average height of feed within said scanning section. Alternatively, the height level of feed recorded within a scanning section triggering operating instructions to the feed distribution device may be a minimum height of feed within said scanning section, or a peak height of feed within said scanning section. An effect of this is that the monitoring of the presence of feed along the feed fence may be effectively adopted to design of the feeding alley, the disposal properties of the feed distribution device, the structure of the feed, etc.

A scanning resolution of the at least one detecting laser scanner may be set according to a coarseness of the feed. An effect of this is that signal data processing is optimized, still maintaining cattle's continuous access to the feed.

In the following is described examples of preferred embodiments illustrated in the accompanying drawings, wherein:
- Fig. 1: is a side view of an animal shed provided with a feed system according to the invention;
- Fig. 2: shows in larger scale a side view of a feeding fence wherein a detecting laser scanner is arranged above a middle portion of a feeding alley to monitor the presence of feed on the feeding alley in front of the feeding fence;
- Fig. 3: shows a top view of a feeding alley defined by two opposing feed fences and monitored by two detecting laser scanners; and
- Fig. 4: shows a side view of a feeding fence wherein a detecting laser scanner is arranged at an end of the feeding alley.

Any positional indications refer to the position shown in the figures.

In the figures, same or corresponding elements are indicated by same reference numerals. For clarity reasons, some elements may in some of the figures be without reference numerals.

A person skilled in the art will understand that the figures are just principal drawings. The relative proportions of individual elements may also be distorted.

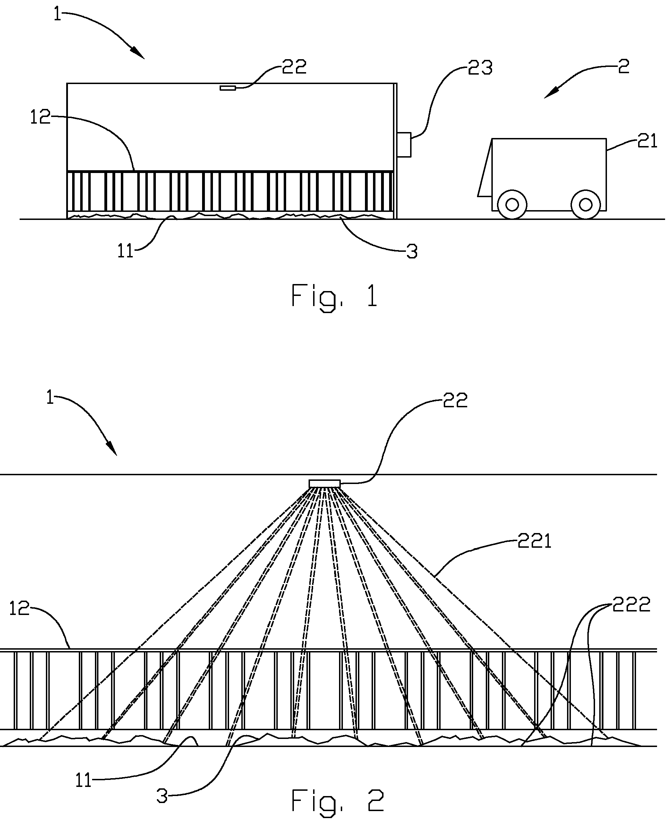

In figure 1 reference numeral 1 denotes a feeding area or an animal shed for a herd, typically a herd of cattle (not shown). A feeding alley 11 arranged to receive coarse fodder 3 like hay, silage, beets, etc., is defined by at least one feeding fence 12 extending along a side edge of the feeding alley 11.

A feed system 2 is arranged to provide said coarse fodder 3 on the feeding alley 11, the feed system 2 comprising a feed distribution device 21, here shown as a vehicle arranged to travel on the feeding alley 11 along the at least one feeding fence 12 feeding the coarse fodder 3 onto the feeding alley 11. In alternative embodiments the feed distribution device 21 may comprise a belt on the floor (not shown). The belt may be a rubber belt. A detecting laser scanner 22 is arranged above the feeding alley 11 and is arranged to monitor at least a portion of the feeding alley 11. Scanning signals are provided to a control device 23 arranged to provide operational instructions to and receive and process status feedback etc. from the feed distribution device 21. A wired or wireless network (not shown) or a combination thereof is provided for signal transmittal from the detecting laser scanner 22 to the control device 23 and between the control device 23 and the feed distribution device 21.

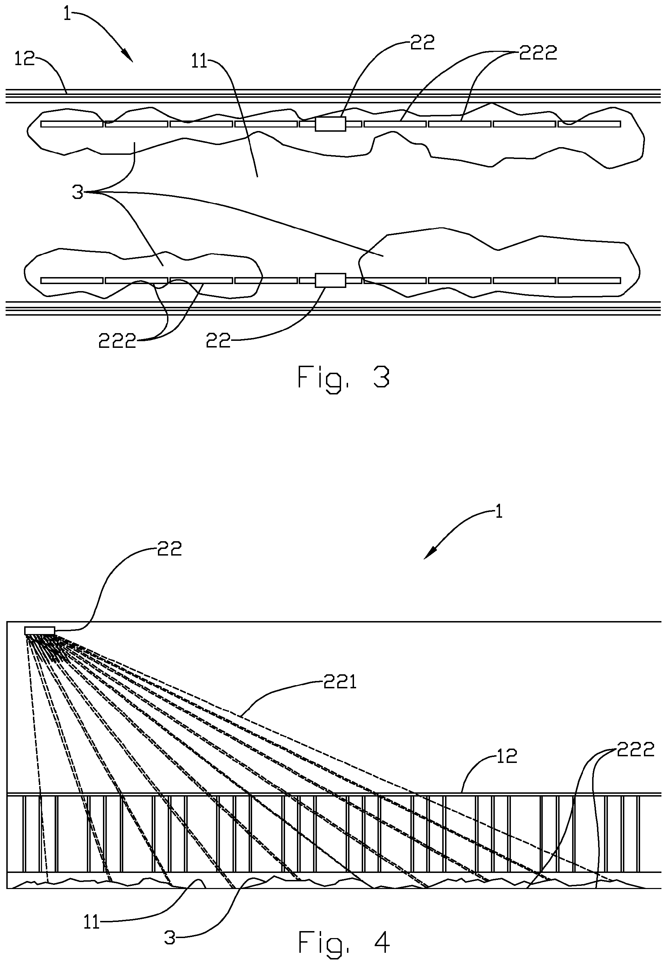

Now it is referred to figures 2 and 3. The detecting laser scanner 22 is arranged to monitor several in-line sections 222 of the feeding alley 11 along the respective feeding fence 12, thus monitoring the level of fodder 3 along a broken line or several fields (as depicted in figure 3) representing the sections 222 to be individually monitored. Laser beams are indicated by the numeral reference 221 in figure 2.

As shown in figure 3, the feed system may be provided with several detecting laser scanners 22, here in the form of one scanner 22 covering a portion of the feeding alley 11 along two opposing feeding fences 12. Similarly, a feeding alley 11 with a feeding fence 12 of a length extending a monitoring range of the scanner 22 may be monitored by two or more scanners 22 in line above the feeding alley 11.

Alternatively, as shown in figure 4, the detecting laser scanner 22 may be provided off-set a mid-point of the portion of the feeding alley 11 to be monitored, e.g. at an end of the feeding alley 11.

SICK TiM35x is an exemplary embodiment of the detecting laser scanner 22 found useful for the feed system 2 according to the invention.

When preparing the feed system 2 for use, the portion(s) of the feeding ally 11 to be monitored should be cleaned prior to an initial scanning, thus setting level zero of the portion of the feeding alley 11 to be monitored during a regular operation of the feed system 1. Furthermore, a maximum height level above "level zero" to be recorded by the control device 23 should be set, thus disregarding registered levels above said "maximum height level", eliminating monitoring of a head of an animal eating fodder 3 provided on the feeding alley 11, etc.

By processing information from a number of scanned sections 222 along the feeding fence 12, the control device may forward instructions to the feed distribution device 21 to provide fodder 3 to portion(s) of the feeding alley 11 lacking fodder 3 only, i.e. to portion(s) of the feeding alley 11 wherein the amount of fodder 3 is found being below a defined level. Various sets of instructions can be provided according to the need of the specific type of herd to be fed, e.g. like providing fodder 3 only to totally empty portions of the feeding alley 11 or only to portions of the feeding alley 11 having a feed level below a defined limit, or providing fodder 3 to all of the feeding alley 11 when the monitored level of a defined number of scanning sections 222 is found to be below a defined limit.

The defined and monitored level for a scanned section 222 may be calculated mean level, peak level, or bottom level.

A scanning resolution of the detecting laser scanner(s) 22 included in the system 2 may be set according to a coarseness of the feed 3, thus optimizing signal data processing without disturbing cattle's access to the feed 3.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. A system (2) for maintaining an amount of feed (3) available for a livestock along a feeding fence (12), the system (2) comprising:
a control device (23),
a feed distribution device (21), and
at least one sensor (22) arranged to monitor the height level of feed (3) on a feeding alley (11) along the feeding fence (12),
**characterised in that**
the at least one sensor (22) is a detecting laser scanner located above the feeding alley (11) and arranged to detect the height level of feed (3) in several separate sections (222) along the feeding fence (12).

2. The system (2) according to claim 1, wherein the at least one sensor (22) is arranged to scan a broken line along the feeding fence (11).

3. The system (2) according to claim 1, wherein the at least one sensor (22) is arranged to scan several fields (222) along the feeding fence (11).

4. The system (2) according to claim 2 or 3, wherein the length of each section (222) of the broken line, alternatively the shape of each scanning field (222), is set individually.

5. The system (2) according to claim 1, wherein the control device (23) is arranged to disregard registered levels above a defined height, thus eliminating recording of monitored objects temporarily present above the feeding alley (11).

6. The system (2) according to claim 1, wherein the control device (23) is arranged to process signals provided by the at least one detecting laser scanner (22) to maintain a defined minimum level of feed on the monitored section (222) of the feeding alley (11) by providing adequate operational instructions to the feed distribution device (21).

7. A method of feeding coarse fodder (3) to a cattle livestock, the method comprising following steps:
a) providing a cattle livestock feeding location with a system (2) according to claim 1;
**characterised in that** the method comprises the further steps of:
b) operating the feed distribution device (21) to distribute coarse fodder (3) on the feeding alley (11) along a portion of the feeding fence (12) within the range monitored by the at least one detecting laser scanner (22) located above the feeding alley (11);
c) monitoring said portion of the feeding alley (11); and
d) upon recorded height level of feed (3) present in one or more of the scanning sections (222) on the feeding alley (11) along the feeding fence (12) being below a defined minimum limit, operating the feed distribution device (21) using the control device (23) to provide operating instructions to the feed distribution device (21) for supply of feed (3) to at least said one or more of the scanning sections (222) to obtain a height level of feed (3) above said defined minimum limit.

8. The method according to claim 7, wherein the height level of feed (3) recorded within a scanning section (222) triggering operating instructions to the feed distribution device (21) is a calculated average height of feed (3) within said scanning section (222).

9. The method according to claim 7, wherein the height level of feed (3) recorded within a scanning section (222) triggering operating instructions to the feed distribution device (21) is a minimum height of feed (3) within said scanning section (222).

10. The method according to claim 7, wherein the height level of feed (3) recorded along a scanning section (222) triggering operating instructions to the feed distribution device (21) is a peak height of feed (3) within said scanning section (222).

11. The method according to claim 7, wherein a scanning resolution of the at least one detecting laser scanner (22) is set according to a coarseness of the feed (3).
